# EUROPEAN PATENT APPLICATION

(11) **EP 2 128 677 A1**
(43) Date of publication of application: **02.12.2009**
(21) Application number: 08722643.7
(22) Date of filing: 21.03.2008
(51) Int. Cl.: G02B 21/00, G02B 21/12

(54) **MICROSCOPE**

(30) Priority: 22.03.2007 JP 2007075485
(71) Applicant: Altair Corporation, Kouhoku-ku Yokohama-shi Kanagawa 222-0033 (JP)
(72) Inventor: HIRAFUJI, Mamoru, Yokohama-shi Kanagawa 222-0033 (JP); TOMINAGA, Ichiro, Yokohama-shi Kanagawa 222-0033 (JP); EDA, Shigeto, Yokohama-shi Kanagawa 222-0033 (JP)
(74) Representative: Roth, Klaus
(86) International application number: PCT/JP2008/055291
(87) International publication number: WO 2008/123146

(57) **Abstract**

A microscope with which a transparent or semitransparent sample can be stereoscopically observed is provided. The microscope includes a placement portion for placing the sample thereon, a magnifier for magnifying the sample to a size viewable through an objective lens, a pattern body where a pattern has been drawn, and a light projector for applying light to at least the pattern body. The placement portion, the pattern body, and the light projector are arranged at positions which enable light projected from the light projector to be applied through the pattern body to the sample arranged within a depth of field of the magnifier by the placement portion.

## Description

### TECHNICAL FIELD

This invention relates to a microscope.

### BACKGROUND ART

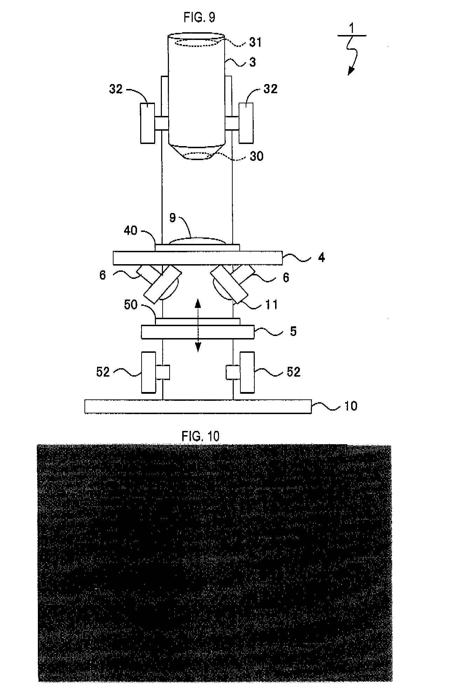

In a conventional microscope, when a transparent or semitransparent sample is observed while being illuminated from behind of the sample in relation to a lens barrel, it is difficult to distinguish a boundary between a background and the sample due to transparency of the sample (in other words, due to low-contrast), and it is thereby impossible to recognize the sample as shown in Fig. 10.

Therefore, in a dark-field microscope, for example, a sample is illuminated obliquely to an optical axis, and light is thereby scattered or reflected on the sample. As a result, the sample is brightened in contrast to a background, which provides higher contrast. Alternatively, in a phase-contrast microscope, phase difference is converted into contrast between light and dark through a condenser, whereby difference in refractive index is clarified and a sample becomes recognizable. Furthermore, in a differential interference microscope, contrast of a sample is enhanced by generating difference in refractive index or in path length using a polarizer.

### DISCLOSURE OF THE INVENTION

### PROBLEMS TO BE SOLVED BY THE INVENTION

In a case of the dark-field microscope, which enables the sample to be sharply-outlined, when the sample is observed through a lens barrel, although it is possible to locate a position of an image within an image plane, which is viewable through an eyepiece, it is impossible to recognize the sample stereoscopically. And the phase-contrast microscope has a characteristic that an image under observation is darkened because only a part of illuminating light is applied to the sample due to its structure. In using the differential interference microscope, a plastic container cannot be used because of a polarizing effect, and a dyed sample is not suitable for observation.

An object of the present invention, which has been devised to solve foregoing problems, is to provide a microscope with which a transparent or semitransparent sample can be stereoscopically observed.

### MEANS TO SOLVE THE PROBLEMS

An invention of a first aspect, which has been devised to solve the foregoing problems, is a microscope for observing a transparent or semitransparent sample. The microscope includes a placement portion for placing the sample thereon, a magnifier for magnifying the sample to a size viewable through an objective lens, a pattern body where a pattern has been drawn, and a light projector for applying light to at least the pattern body. The placement portion, the pattern body, and the light projector are arranged at positions which enable light projected from the light projector to be applied through the pattern body to the sample arranged within a depth of field of the magnifier by the placement portion.

In the invention of the first aspect, since the light projected from the light projector is applied to the pattern body, and the light which has been applied to the pattern body is further applied to the sample, the pattern drawn on the pattern body is projected on the sample. Hereat, the pattern is distortedly projected along the stereoscopic shape of the sample and therefore, due to distortion, the sample is silhouetted stereoscopically within an image plane of an image, which is viewable when the sample is observed through a lens barrel.

Accordingly, the transparent or semitransparent sample can be observed stereoscopically by using the microscope.

The pattern body may be transparent or opaque.

As in an invention of a second aspect, the light projector may be arranged at a position which enables the light to be applied also to the sample because the sample is thereby brightly illuminated. In an embodiment of such a light projector, one which illuminates the sample and one which illuminates the pattern body may be separately configured.

As in an invention of a third aspect, the placement portion, the pattern body, and the light projector may be arranged at positions which enable the light projected from the light projector to be applied to the sample via the pattern body and further through the placement portion which is formed of a transparent or semitransparent material.

The sample placed on the placement portion can thereby be illuminated from below by the light which has been applied to the pattern body, and when the illuminated sample is viewed from above through the magnifier, the sample can be observed brightly and stereoscopically.

The term "via the pattern body" here includes a concept of "via the medium of the pattern body" like in a case where the light projected from the light projector reflects on the pattern body or transmits through the pattern body.

As in an invention of a fourth aspect, the magnifier, the placement portion, the pattern body may be arranged in a straight line in an above-presented order, and the pattern body may be configured to be movable along a direction in which the magnifier, the placement portion, and the pattern body are arranged. In that case, it is preferable to arrange the pattern body outside a depth of field of the magnifier.

The pattern drawn on the pattern body can be thereby projected on the sample after arbitrarily adjusted to an appropriate size for observation. Although the magnifier, the placement portion, and the pattern body are arranged in a straight line in the above-presented order, only the sample can be clearly viewed whereas the pattern body appears blurred within the image plane because the pattern body is arranged outside the depth of field of the magnifier. As a result, only the sample can be sharply recognized within the image plane without being disturbed by the pattern drawn on the pattern body.

As in an invention of a fifth aspect, the pattern body is formed of a transparent base material where a pattern is drawn, and the magnifier, the placement portion, the pattern body, and the light projector may be arranged in a straight line in an above-presented order. The light projected form the light projector may be transmitted through the pattern body and the placement portion, and applied to the sample.

Since the light projected from the light projector thereby enters the magnifier directly, the bright sample illuminated by the light can be observed through the magnifier.

As in an invention of a sixth aspect, the light projector may be arranged on a side of the magnifier rather than on a side of the placement portion, and an arrangement direction of the placement portion or the pattern body and the light projector may be made variable with respect to an arrangement direction of the magnifier, the placement portion, and the pattern body, using a variable portion.

The microscope can thereby be configured more compactly than in a case where the light projector is arranged on the opposite side of the placement portion in relation to the pattern body in order to illuminate the sample. In addition, the sample can be observed with easily- viewable brightness by varying how the light is applied to the sample.

As in an invention of a seventh aspect, the light projector may be arranged between the placement portion and the pattern body, and also at a position which is not on a line where the magnifier, the placement portion, and the pattern body are arranged.

With regard to the pattern on the pattern body, any kind of patterns such as pictures and characters may be drawn, and preferable are a pattern composed of at least one circle, a pattern composed of a plurality of parallel lines arranged in a line, a pattern with at least one character arranged, or a pattern configured by projecting a predetermined soled figure. Specifically, a black circle against a white background, a plurality of parallel lines arranged in a line, and the like are preferable in practical use. When a string of characters is used as a pattern, the pattern is applicable for advertisement and the like by projecting the string of characters on a sample.

### BRIEF DESCRIPTION OF THE DRAWINGS

FIG. 1 is a schematic diagram of a microscope according to an embodiment viewed from a front side.
FIG. 2 is a micrograph showing an observation result of a transparent sample 9 when a pattern body where a circular pattern with a black outline (o) is drawn against a white background is used.
FIG. 3 is a micrograph showing an observation result of a transparent sample when a pattern body where a black circular pattern (•) is drawn against a white background is used. An angle of an arrangement direction β with respect to an arrangement direction α is 20 degrees.
FIG. 4 is a micrograph showing an observation result of a transparent sample when a pattern body where a black circular pattern (•) is drawn against a white background is used. An angle of an arrangement direction β with respect to an arrangement direction α is 45 degrees.
FIG. 5 is a micrograph showing an observation result of a transparent sample when a pattern body where a black circular pattern (•) is drawn against a white background is used. An angle of an arrangement direction β with respect to an arrangement direction α is 90 degrees.
FIGS. 6A-6B are explanatory diagrams illustrating modified examples of a pattern drawn on a pattern body.
FIGS. 7A-7C are explanatory diagrams illustrating modified examples of a pattern.
FIG. 8 is an explanatory diagram showing a modified example of a microscope according to an embodiment.
FIG. 9 is an explanatory diagram showing a modified example of a microscope according to an embodiment.
FIG. 10 is a micrograph showing an observation result of a transparent sample when a conventional microscope is used.

### EXPLANATION OF REFERENCE NUMERALS

1... microscope, 3...lens barrel, 4...stage for placing a sample thereon, 5... stage for placing a pattern body thereon, 6...light projector, 9...sample 9, 10...base, 11...support post, 30...objective lens, 31...eyepiece, 32...focusing knobs, 40...glass slide, 50...pattern body, 52...height adjustment knobs, 60...rails, 313a...eyepiece

### BEST MODE FOR CARRYING OUT THE INVENTION

Embodiments according to the present invention will be illustrated hereinafter by way of drawings.

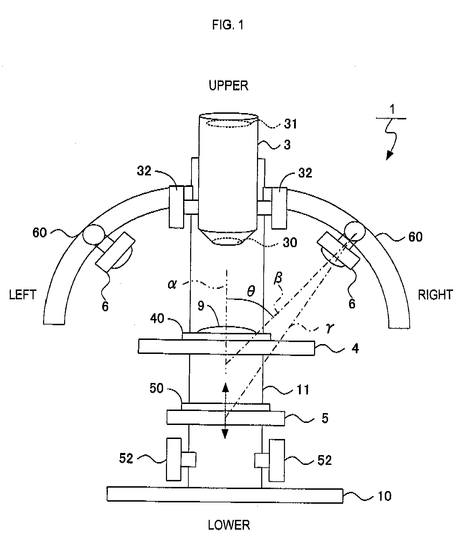

Hereat, FIG. 1 is a schematic diagram of a microscope according to the present embodiment viewed from a front side.

In explanations hereinafter, an upper side, a lower side, a right side, and a left side relative to a direction of gravitational force when a microscope 1 is viewed from the front side is respectively referred to as an upper side, a lower side, a right side, and a left side. FIG. 1 is the diagram of the microscope 1 viewed from the front side, and on the sheet, an upper side, a lower side, a right side, and a left side of the sheet respectively correspond to the upper side, the lower side, the right side, and the left side, as indicated on the sheet.

### 1. Overall structure

As shown in FIG. 1, the microscope 1 according to the present embodiment includes a base 10 which is placed on the not-shown placement surface, and a support post 11 which is provided extendedly upward from the base 10.

The support post 11 is provided with a lens barrel 3, a stage 4 for placing a sample thereon, and a stage 5 for placing a pattern body thereon, and the above 3-5 are mounted on the support post 11 in a line in the above-presented order from the upper side to the lower side. In relation to the support post 11, the side where the lens barrel 3, the stage 4 for placing a sample thereon, and the stage 5 for placing a pattern body thereon are mounted is hereinafter referred to as a front side of the microscope 1.

The support post 11 is further provided with a pair of rails 60. When the microscope 1 is viewed from the front side, the rails 60 are extended in directions away from each other from both the right and left sides of the support post 11 at the height where the lens barrel 3 is mounted, and further extended downward in an arc with an upwardly convex shape.
Each of the rails 60 is respectively provided with a light projector 6, which is mounted on each of the rails 60 movably along a longitudinal direction (extending direction) thereof.

### 1.1. Lens barrel

The lens barrel 3 is provided with an objective lens 30 on one end of the lens barrel 3 in an axial direction, the one end facing downward when the lens barrel 3 is mounted on the support post 11. The lens barrel 3 is also provided with an eyepiece 31 on the other end of the lens barrel 3 in the axial direction, the other end facing upward when the lens barrel 3 is mounted on the support post 11.

The lens barrel 3 is further provided with focusing knobs 32 on both of the right and left sides thereof. The focusing knobs 32 are rotatably mounted on the lens barrel 3. When the focusing knobs 32 are rotated, the eyepiece 31 is moved inside the lens barrel 3along the axial direction of the lens barrel 3.

With the thus configured lens barrel 3, when a sample 9 placed on the stage 4 is viewed through the objective lens 30 and the eyepiece 31 by peering into the eyepiece 31, it is possible to adjust a focus on the sample 9 by rotating the focusing knobs 32.

### 1.2. Stage for placing a sample thereon

The stage 4 for placing the sample thereon is formed into a plate shape, and fixed to the support post 11 so that a top surface 4a for placing the sample 9 thereon is horizontally arranged. The stage 4 for placing a sample thereon can be adjusted to be at a position where the sample 9 placed on the stage 4 can be arranged within an area where the lens barrel 3 can achieve proper focus, that is, within a depth of field of the lens barrel 3.

The stage 4 for placing a sample thereon is either provided with a hole to allow light to pass therethrough or composed of a transparent material (glass) in itself.

### 1.3. Stage for placing a pattern body

The stage 5 for placing a pattern body thereon is formed into a plate shape, and fixed to the support post 11 movably along a longitudinal direction of the support post 11 while a top surface 4a for placing a pattern body 50 thereon is horizontally kept. The stage 5 for placing a pattern body thereon can be adjusted to be at a position where the pattern body 50 can be arranged within an area where the lens barrel 3 fails to achieve a proper focus, that is, outside the depth of field of the lens barrel 3.

The stage 5 for placing a pattern body thereon is provided with height adjustment knobs 52 which are arranged below the stage 5 for placing a pattern body and on both of the right and left sides of the support post 11. The height adjustment knobs 52 are rotatably mounted on the lens barrel 3, and the stage 5 for placing a pattern body thereon is moved vertically by rotating the height adjustment knobs 52.

### 1.4. Light projector

The light projectors 6 are movably fixed to the rails 60 as aforementioned.

The light projectors 6 are arranged on the upper side of the stage 4 for placing a sample thereon when viewed vertically.

The light projectors 6 are so arranged as to make it possible to vary angles of an arrangement direction β of the stage 4 for placing a sample thereon and the light projectors 6 or an arrangement direction γ of the stage 5 for placing a pattern body thereon and the light projectors 6 with respect to an arrangement direction α of the lens barrel 3, the stage 4 for placing a sample thereon, and the stage 5 for placing a pattern body thereon.

### 2. Usage of the microscope

Next, usage of the microscope 1 configured as above will be explained.

When using the microscope 1, the pattern body 50 which is tabularly formed is so placed on a top surface 5a of the stage 5 for placing a pattern body thereon as to be superimposed on the stage 5 for placing a pattern body, and a glass slide 40 on which the sample 9 is placed is so arranged as to be superimposed on the stage 4 for placing a sample thereon.

Then, light is applied from the light projectors 6 toward the sample 9 and the pattern body 50, a focus of the lens barrel 3 is adjusted using the focusing knobs 32, and a height of the pattern body 50 is adjusted using the height adjustment knobs 52.

Further, the light projectors 6 are moved along the rails 60 and projecting angles to the sample 9 and the pattern body 50 are adjusted.

The microscope 1 of the present embodiment is used after carrying out such arrangements and adjustments.

### 3. Results from use of the microscope

Next, observation results of the sample 9 when the microscope 1 according to the present embodiment was used will be explained.

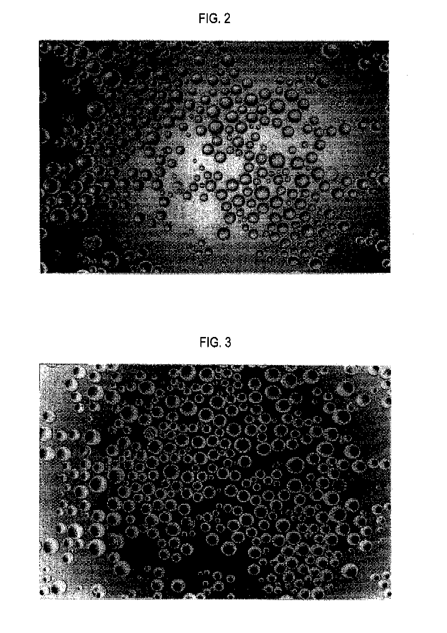

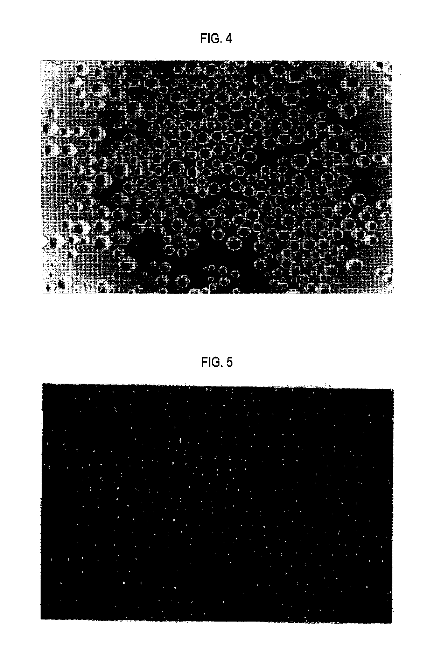

Hereat, Fig. 2 shows an observation result of the transparent sample 9 (e.g., polysaccharide gel) when a pattern body 50 where a circular pattern with a black outline (○) is drawn against a white background was used, and Figs. 3-5 show observation results of the transparent sample 9 (e.g., polysaccharide gel) when a pattern body 50 where a black circular pattern (•) is drawn against a white background was used. An angle θ of an arrangement direction β with respect to an arrangement direction α was 20 degrees in Fig. 3, 45 degrees in Fig. 4, and 90 degrees in Fig. 5.

As shown in Fig. 2, a silhouette and a stereoscopic configuration of the sample 9 were easily recognized when the pattern body 50 where a circular pattern with a black outline is drawn against a white background was used.

As shown in Figs. 3 and 4, when the pattern body 50 where a black circular pattern is drawn against a white background was used, the black circular pattern was reflected on the sample 9, whereby the sample 9 was observed clearly and stereoscopically. Though a black circle, which is a pattern of the pattern body 50, was reflected on the sample 9, the black circle was blurred and therefore, the sample 9 was observed sharply, specifically when the angle of the arrangement direction β with respect to the arrangement direction α was in a range from 20 degrees to 70 degrees.

As shown in Fig. 5, when the angle of the arrangement direction β with respect to the arrangement direction α was 90 degrees, the sample 9 was not recognized clearly even if the pattern body 50 where a black circular pattern is drawn against a white background was used because light through the pattern body 50 is not applied to the sample 9.

### 4. Characteristic effects of the present embodiment

When the microscope according to the present embodiment is used, the pattern is projected on the sample 9 distortedly along the stereoscopic shape of the sample 9 and therefore, due to the distortion, the sample 9 is silhouetted stereoscopically against surroundings thereof. In addition, since the pattern of the pattern body 50 projected around the sample 9 is blurred, only the sample 9 can be recognized sharply even if the pattern body 50 comes into view.

Accordingly, when the sample 9 is observed with the microscope 1, the sample 9 which is transparent or semitransparent can be observed stereoscopically. Furthermore, only the sample 9 can be recognized sharply though the pattern of the pattern body 50 is reflected on the sample 9.

When the microscope 1 is used, the sample 9 can be observed stereoscopically by adjusting the angle of the arrangement direction β with respect to the arrangement direction α to approximately between 20 degrees and 70 degrees. Further, when the angle is set to 20 degrees, the sample 9 can be observed clearly compared to a case where the angle is set to 70 degrees.

Additionally, when the sample 9 is observed with the microscope 1, light from the light projector 6 is also applied to the sample 9 and therefore, the sample 9 is illuminated brightly and is easy to be observed.

### (Other embodiments)

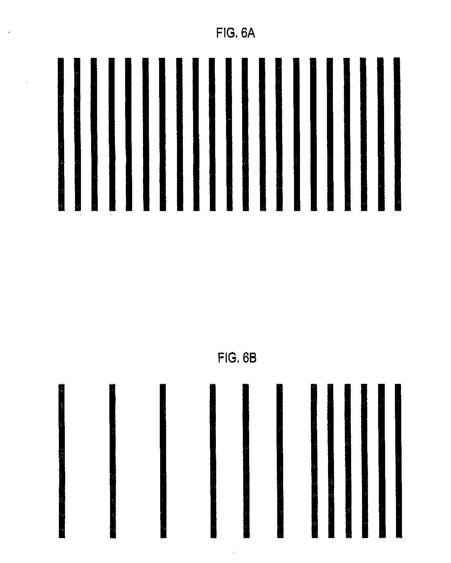

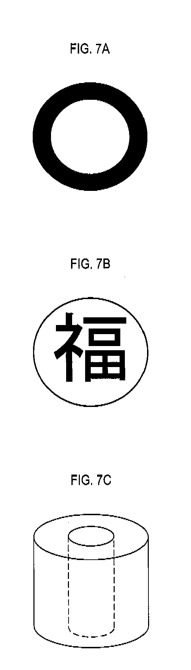

While the pattern body 50 where a black circular pattern is drawn against a white background was used in the above embodiment, the pattern may be composed of a plurality of parallel lines arranged in a line as shown in Figs. 6A and 6B. In such a case, the plurality of parallel lines may be differently spaced so that spaces between the lines are gradually widened as proceeding along an arrangement direction of the plurality of parallel lines from one end to the other as shown in Fig. 6A. Alternatively, the plurality of parallel lines may be equally spaced as shown in Fig. 6B. Other than the above, the pattern may be composed of one circle as shown in Fig. 7A, one circle with a character arranged therein as shown in Fig. 7B, or a projection image of a solid figure (e.g., a ring-shaped cylinder) as shown in fig. 7C.

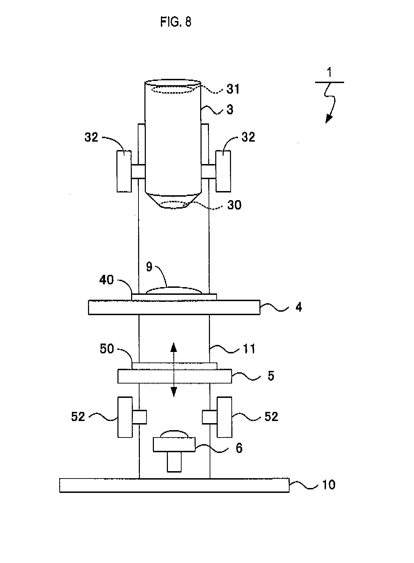

While the embodiment in which the light projector 6 is arranged between the stage 4 for placing a sample thereon and the lens barrel 3 was explained above, the light projector 6 may be arranged below the stage 5, which is transparent, for placing a pattern body thereon as shown in Fig. 8. In such a case, it is preferable to use the pattern body 50 composed of a transparent base material with a pattern drawn thereon.

While the embodiment in which the light projector 6 is arranged between the stage 4 for placing a sample thereon and the lens barrel 3 was explained above, the light projector 6 may alternatively be arranged between the stage 4 for placing a sample thereon and the stage 5 for placing a pattern body thereon so that the light from the light projector 6 is applied only to the pattern body 50 as shown in Fig. 9.

The stage 4 for placing a sample thereon may have an opening through which light proceeding toward the lens barrel 3 through the pattern body 50 and further through the sample 9 can pass at a portion where the stage 4 intersects with a path of the light. In such a case, the stage 4 may be formed of an opaque material.

The present invention may be modified as long as a modification is consistent with the spirit of the invention set forth in the claims, and is not limited to the above-described embodiments.

## Claims

1. A microscope for observing a transparent or semitransparent sample comprising:
a placement portion for placing the sample thereon;
a magnifier for magnifying the sample to a size viewable through an objective lens;
a pattern body where a pattern has been drawn; and
a light projector for applying light to at least the pattern body,
wherein the placement portion, the pattern body, and the light projector are arranged at positions which enable light projected from the light projector to be applied via the pattern body to the sample arranged within a depth of field of the magnifier by the placement portion.

2. The microscope according to claim 1,
wherein the light projector is arranged at a position which enables the light to be applied also to the sample.

3. The microscope according to either of claim 1 or claim 2,
wherein the placement portion is formed of a transparent or semitransparent material, and
wherein the placement portion, the pattern body, and the light projector are arranged at positions which enable the light projected from the light projector to be applied to the sample via the pattern body and further through the placement portion.

4. The microscope according to claim 3,
wherein the magnifier, the placement portion, and the pattern body are arranged in a straight line in an above-presented order, and
wherein the pattern body is configured to be movable along a direction in which the magnifier, the placement portion, and the pattern body are arranged, and is arranged outside a depth of field of the magnifier.

5. The microscope according to either of claim 3 or claim 4,
wherein the pattern body is composed of a transparent base material with a pattern drawn thereon,
wherein the magnifier, the placement portion, the pattern body, and the light projector are arranged in a straight line in an above-presented order, and
wherein the light projected from the light projector is applied to the sample through the pattern body and the placement portion.

6. The microscope according to either of claim 3 or claim 4,
wherein the light projector is arranged on a side of the magnifier rather than on a side of the placement portion, and
wherein an arrangement direction of the placement portion or the pattern body and the light projector is made variable with respect to an arrangement direction of the magnifier, the placement portion, and the pattern body, using a variable part.

7. The microscope according to either of claim 3 or claim 4,
wherein the light projector is arranged between the placement portion and the pattern body, and also at a position which is not on a line where the magnifier, the placement portion, and the pattern body are arranged.

8. The microscope according to any of claims 1-7,
wherein the pattern on the pattern body is composed of at least one circle.

9. The microscope according to any of claims 1-7,
wherein the pattern on the pattern body is a pattern composed of a plurality of parallel lines arranged in a line, a pattern with at least one character arranged, or a pattern configured by projecting a predetermined three-dimensional figure.
